# DEMANDE DE BREVET EUROPEEN

(11) **EP 3 196 546 A1**
(43) Date de publication de la demande: **26.07.2017**
(21) Numéro de dépôt: 17305059.2
(22) Date de dépôt: 19.01.2017
(51) Int. Cl.: F21V 8/00, G02B 6/032, G02B 6/28, G02B 6/35

(54) **COUPLEUR DE FIBRES OPTIQUES AVEC UNE FIBRE PRINCIPALE À COEUR LIQUIDE, KIT ET PROCÉDÉ DE COUPLAGE METTANT EN OEUVRE UN TEL COUPLEUR**

(30) Priorité: 19.01.2016 FR 1650422
(71) Demandeur: Novaday, 38200 Vienne (FR)
(72) Inventeur: FOUROT, Jérome, 38440 Saint-Jean de Bournay (FR); BATAILLOU, Benoit, 1950 Sion (FR)
(74) Mandataire: Jacobacci Coralis Harle

(57) **Abrégé**

La présente demande concerne un coupleur de fibres optiques (10) comportant une fibre optique principale (100) à coeur liquide, comprenant une gaine principale (110) contenant un liquide (111) ou un gel d'indice optique supérieur à l'indice optique de la gaine. De façon avantageuse, l'invention comprend au moins une fibre optique dite secondaire (130), de plus petite section droite transversale que la fibre optique principale (100), traversant une partie de la gaine de la fibre à coeur liquide de sorte qu'une de ses extrémités dite proximale (131) soit située dans le liquide (111) ou le gel contenu dans la gaine principale (110) tandis que l'autre extrémité dite distale (132) est située à l'extérieur de la gaine principale (110).

## Description

La présente invention concerne le domaine technique du guidage optique et plus particulièrement de domaine des coupleurs de fibres optique comprenant une fibre optique à coeur liquide.

La présente demande se rapporte également à une fibre optique à coeur liquide utilisée avec un coupleur, à un kit comprenant ladite fibre optique ainsi qu'à un procédé de couplage ou de découplage d'un faisceau de lumière à l'aide du kit.

Les coupleurs optiques permettent de capter une partie de la lumière se propageant dans une fibre optique, mais également de propager dans une même fibre optique la lumière provenant de deux fibres optiques distinctes. Ils ont donc une grande utilité pour exploiter la lumière dans différents domaines techniques, comme la recherche fondamentale, les communications, l'industrie...

Habituellement, un coupleur optique comprend un milieu apte à guider un faisceau de lumière et des moyens de déviation d'au moins une partie du faisceau vers l'extérieur du milieu. Le milieu de propagation est constitué d'un corps solide couramment appelé le coeur de la fibre optique. Les moyens de déviation peuvent être constitués par des grains présents dans le coeur de la fibre, dont les dimensions sont adaptées pour diffuser la lumière se propageant dans la fibre. La lumière est alors visible tout autour de la fibre au niveau de la zone comprenant les grains. Cette solution a pour inconvénient de diffuser la lumière dans des directions non contrôlées, limitant de ce fait la quantité de lumière susceptible d'éclairer une zone souhaitée.

Afin de remédier à ce problème, un autre type de coupleur optique utilise comme moyens de déviation des marques régulières formées à la surface du coeur de la fibre, de sorte à former un réseau de diffraction. De façon avantageuse, le réseau de diffraction permet de contrôler précisément les directions selon lesquelles la lumière est découplée du milieu de propagation. Néanmoins, le réseau découple la lumière selon plusieurs directions ce qui implique qu'une partie de la lumière découplée n'éclairera pas une zone souhaitée. De plus, la réalisation d'un réseau sur une surface petite et courbée telle qu'une fibre optique, est un procédé délicat et coûteux. Par ailleurs, ce type de coupleur nécessite un contrôle maîtrisé de l'environnement afin d'éviter toute pollution à la surface du réseau susceptible de nuire à son rendement.

Ces deux coupleurs optiques ont également pour inconvénients de ne pas être adaptables dans le sens où les moyens de diffusion modifient de façon irréversible les propriétés optiques du milieu de diffusion. De ce fait, ils ont également pour inconvénient de ne pas pouvoir modifier les conditions de découplage de la lumière. Ainsi, si on souhaite modifier la proportion de lumière découplée du milieu optique et/ou changer sa direction de diffusion, il s'avère nécessaire de substituer le coupleur optique par un plus adapté. Cela implique des manipulations délicates, longues et coûteuses.

La présente demande vise donc à proposer une solution répondant aux différents problèmes techniques mentionnés ci-dessus. En particulier, l'invention propose un coupleur optique permettant de mieux contrôler la proportion de lumière découplée d'une fibre optique ainsi que sa direction de propagation. Selon un objectif complémentaire, la présente demande vise aussi à offrir un unique coupleur optique permettant de modifier à volonté et rapidement, la proportion ainsi que la direction de la lumière découplée.

Afin de résoudre les problématiques mentionnées ci-dessus, l'invention propose un coupleur de fibres optiques comportant une fibre optique à coeur liquide, dite fibre principale, comprenant une gaine principale contenant un liquide ou un gel d'indice optique supérieur à l'indice optique de la gaine. Par les termes « liquide » ou « gel », on entend un milieu apte à se déformer pour permettre l'introduction d'un objet dans le milieu puis, après le retrait de l'objet du milieu, d'occuper de nouveau l'espace libéré par l'objet. Bien entendu, la distinction entre un liquide et un gel dépend de sa viscosité, propriété qui évolue en fonction de sa température. De préférence, le coeur liquide comprend au moins un des liquides ou gels suivants : gel silicone, gel de silice, huile minérale, contenant ou non des agents diffusants type TiO₂. La gaine principale peut être réalisée de toute manière appropriée et, par exemple, présenter un revêtement réfléchissant sur sa face au contact du coeur liquide.

L'invention se caractérise en ce que le coupleur de fibre optique comprend au moins une fibre optique dite secondaire, de plus petite section droite transversale que la fibre optique principale, traversant une partie de la gaine de la fibre optique principale de sorte qu'une de ses extrémités dite proximale est située dans le liquide ou le gel contenu dans la gaine principale, tandis que l'autre extrémité dite distale est située à l'extérieur de la gaine principale.

Par les termes « section droite transversale », on désigne les dimensions d'une fibre optique dans un plan normal à la direction de propagation d'un faisceau de lumière dans la fibre optique ou encore un plan orthogonal à la fibre moyenne de la fibre optique correspondante. La section droite transversale d'une fibre optique peut être de formes diverses, comme par exemple de forme carré ou rectangulaire, de préférence de forme circulaire ou ovale.

L'invention permet donc de coupler ou de capter au moins une partie d'un faisceau de lumière se propageant dans la fibre optique principale, grâce à la présence d'une extrémité proximale d'une fibre optique secondaire dans le liquide ou le gel contenu dans la gaine principale. Ainsi, une partie de la lumière se propageant dans la fibre optique principale peut être déviée par la fibre optique secondaire jusqu'à son extrémité distale de sorte à éclairer précisément une zone souhaitée. La gaine principale est réalisée dans un matériau permettant le passage de l'extrémité proximale de la fibre optique secondaire. La gaine principale peut aussi comprendre au moins un passage aménagé dans l'épaisseur de la gaine pour le passage de la fibre secondaire comme par exemple décrit ci-dessous. Un avantage de la mise en oeuvre d'une fibre à coeur liquide réside dans la grande section d'une telle fibre par rapport à une fibre à coeur solide ce qui permet à la fibre à coeur liquide de guider une grande quantité de lumière issue d'une source peu concentrée comme par exemple un dalle de diodes électroluminescentes. Ainsi, pour une fibre d'un centimètre de diamètre il est possible, par exemple, d'utiliser comme source de lumière un pavé de 5mm de coté couvert de diodes électroluminescentes formant une source de lumière émettant au moins 10 000 lumens. Une fibre à coeur solide de faible section impose au contraire d'utiliser une source de lumière concentrée telle qu'un laser dont le coût est beaucoup plus élevé que celui de diodes électroluminescente.

De façon avantageuse, les propriétés mécaniques du liquide ou du gel permettent d'insérer, de retirer ou de déplacer à volonté l'extrémité proximale d'une fibre optique secondaire dans le coeur liquide de la fibre optique principale, sans dégradation irréversible de ses qualités optiques après le retrait de la fibre optique secondaire. Le coeur liquide peut alors être qualifié d'auto-résorbable. Ainsi, une ou plusieurs fibres optiques secondaires peuvent être couplées ou découplées de nombreuses fois à une fibre optique principale, sans détériorées ses propriétés optiques.

De plus, le coeur liquide de la fibre optique principale permet de déplacer l'extrémité proximale de la fibre secondaire dans le liquide ou le gel, jusqu'à obtenir l'intensité lumineuse souhaitée au niveau de l'extrémité distale de la fibre secondaire. En d'autres termes, la quantité de lumière couplée dans la fibre secondaire peut aisément être réglée ou ajustée (augmentée ou réduite) en déplaçant son extrémité distale dans la fibre optique principale, sans qu'il soit pour cela nécessaire d'utiliser d'autres moyens fragiles, coûteux et non adaptables tels que décrits ci-dessus. La présence de l'extrémité proximale de la fibre optique secondaire dans le coeur liquide de la fibre optique principale, permet donc de contrôler plus simplement et aisément la quantité de lumière émise par l'extrémité distale de la fibre optique secondaire. L'invention offre ainsi une nouvelle façon de coupler une fibre optique principale à une fibre optique secondaire, plus simple à mettre en oeuvre, plus sûre et moins coûteuse que les méthodes ou les dispositifs de couplage selon l'art antérieur.

Par ailleurs, le couplage optique entre la fibre optique principale et la fibre optique secondaire est, avantageusement, réalisé à l'intérieur même de la fibre optique principale, environnement plus facilement contrôlable que l'extérieur de la fibre. De ce fait, le couplage peut être réalisé avec moins de contraintes par rapport à l'environnement, avec un meilleur rendement de couplage.

Selon une caractéristique de l'invention, le coupleur de fibres optiques comporte au moins une fibre optique secondaire comprenant une gaine contenant un milieu dont l'indice optique est supérieur à l'indice optique du liquide ou du gel contenu dans la gaine principale.

Selon une autre caractéristique de l'invention, la fibre optique principale et au moins une fibre optique secondaire d'un coupleur de fibres optiques décrit ci-dessus, ont chacune une section circulaire, le diamètre de la fibre optique secondaire étant inférieur ou égal à la moitié du diamètre de la fibre optique principale. Cette caractéristique permet de faciliter la répartition de la puissance lumineuse entre les deux fibres. De plus, du fait de sa plus petite section chaque fibre optique secondaire ne perturbe pas trop la propagation du faisceau lumineux au sein de la fibre optique principale.

Selon encore une autre caractéristique de l'invention, l'extrémité proximale d'au moins une fibre optique secondaire, présente dans le liquide ou gel contenu dans la gaine principale, comprend au niveau de son extrémité des moyens de couplage dit proximaux, permettant à au moins une partie d'une lumière se propageant dans la gaine principale de se propager dans la fibre optique secondaire.

Selon une variante de cette caractéristique préférée, les moyens de couplage proximaux consistent en l'un des moyens suivants :
- une face plane ; ou
- une face courbe au niveau de l'extrémité proximale de la fibre optique secondaire ; ou
- un prisme et/ou un réseau optique et/ou une lentille commandée à courbure variable accolé à l'extrémité proximale de la fibre optique secondaire.

Selon une autre variante de cette caractéristique, les moyens de couplage proximaux comprennent des moyens pilotables de modulation de la quantité de lumière entrant dans la fibre secondaire. De tels moyens de modulation pilotables peuvent être réalisés de toute manière appropriée telle qu'une lentille à courbure variable, un diaphragme mécanique ou électronique.

Selon une caractéristique de l'invention, une fibre optique secondaire d'un coupleur de fibres optiques peut comprendre, une portion proximale mobile dans la fibre principale pour permettre une modification de la position de l'extrémité proximale de la fibre optique secondaire dans le liquide ou le gel contenu dans la gaine principale. La mobilité de l'extrémité proximale de la fibre optique secondaire permet de façon avantageuse de déplacer son extrémité à l'intérieur de la gaine principale pour modifier les conditions de couplage d'un faisceau de lumière se propageant dans la gaine principale dans la fibre optique secondaire. Ainsi, on peut contrôler la quantité de lumière captée par la fibre optique secondaire dans la fibre optique principale.

En d'autres termes, la portion proximale de la fibre optique secondaire peut être déplacée entre la paroi interne et le centre de la gaine principale, de sorte à ce que la fibre secondaire capte plus ou moins l'intensité lumineuse du faisceau de lumière se propageant dans la fibre optique principale. Plus précisément, la quantité de lumière couplée dans la fibre optique secondaire est proportionnelle à la distance entre son extrémité distale et le centre de la fibre optique principale. A cet égard il doit être noté que l'intensité du faisceau lumineux guidé par la fibre optique principale décroit à partir centre de cette dernière en direction de la gaine principale. Dans une forme préférée mais non exclusive de réalisation, le centre de la fibre optique secondaire, au niveau de son extrémité proximale, est distante, du centre de la fibre optique principale, d'une valeur comprise entre 0 et 1 fois la plus petite distance d séparant le centre de la fibre optique principale à la paroi interne de la gaine principale en contact avec le liquide ou le gel. Selon un mode de réalisation préféré, la valeur de cette distance est comprise entre 0 et 0,75 d ou entre 0 et 0,5 d ou entre 0 et 0,25 d, pour maximiser ou diminuer la quantité de lumière envoyée dans la fibre secondaire. Par les termes « centre de la fibre optique principale », on entend le centre de la fibre dans un plan normal à la propagation d'un faisceau de lumière dans la fibre optique.

Selon un mode de réalisation de l'invention, un coupleur de fibres optiques comprend des moyens d'inclinaison permettant de modifier l'inclinaison de l'extrémité proximale de la fibre optique secondaire dans le coeur liquide de la fibre optique principale. De façon avantageuse, les moyens d'inclinaison permettent de contrôler l'orientation de l'extrémité proximale dans la fibre optique principale afin que celle-ci soit plus ou moins alignée avec la direction de propagation d'un faisceau de lumière se propageant dans la fibre principale. A titre d'exemple, les moyens d'inclinaison peuvent permettre de modifier la valeur d'un angle de couplage, formé entre la direction de propagation d'un faisceau de lumière dans la fibre principale et la direction de propagation d'un faisceau de lumière dans la fibre secondaire, au niveau de l'extrémité proximale de la fibre optique secondaire. Les moyens d'inclinaison peuvent modifier cette valeur de sorte qu'elle soit comprise entre 0° et 90°, de préférence entre 0° et 45°. Selon une forme de réalisation, les moyens d'inclinaison comprennent un ou plusieurs guides courbés, disposés dans la fibre optique principale, permettant une modification de l'inclinaison de l'extrémité proximale et/ou de la section d'entrée de la fibre optique secondaire correspondante en fonction de sa position le long du ou des guides.

Selon un autre mode de réalisation de l'invention, un coupleur de fibres optiques décrit ci-dessus comprend au moins deux fibres optiques secondaires, qui sont situées en des endroits différents de la fibre optique principale et dont les extrémités proximales sont distantes dans le liquide ou le gel contenu dans la gaine principale.

Afin de limiter l'influence d'une fibre optique secondaire sur la qualité du couplage d'un faisceau de lumière, dans une autre fibre optique secondaire, les extrémités proximales des fibres optiques secondaires sont désalignées par rapport à l'axe de propagation d'un faisceau de lumière dans la fibre optique principale. Autrement dit, les extrémités proximales des fibres optiques secondaires sont agencées dans la fibre optique principale de sorte à limiter le couplage optique par une fibre optique secondaire, située en amont d'une autre fibre optique secondaire. Les termes « amont » et « aval » sont définis par rapport au sens de propagation d'un faisceau de lumière dans la fibre optique principale.

Selon une variante de réalisation, afin de limiter ce phénomène d'ombre portée, l'angle formé entre des droites passant par le centre des extrémités des fibres optiques secondaires et normales à la direction de propagation d'un faisceau de lumière dans la fibre optique principale est supérieur à 10° ou 20°, de préférence compris entre 15° et 35°.

Afin d'optimiser le nombre d'extrémités proximales présentes dans la fibre optique principale, tout en minimisant le phénomène d'ombre portée, les extrémités proximales peuvent être positionnées de façon régulière tout autour du centre de la fibre optique principale, par exemple tous les 5° ou 10°.

Selon une caractéristique de l'invention, un coupleur de fibres optiques décrit ci-dessus comprend des moyens de maintien de la fibre optique secondaire à la fibre optique principale, de sorte à limiter ou empêcher leurs mouvements relatifs. Autrement dit, les moyens de maintien assurent l'immobilisation de la fibre optique secondaire au niveau de la gaine de la fibre optique principale afin de préserver les conditions de couplages. Bien entendu, ces moyens de maintien sont de préférence réversibles de manière à permettre à volonté et très rapidement, le couplage ou le découplage de la fibre optique secondaire à la fibre optique principale. A titre d'exemple, les moyens de maintien peuvent comprendre l'un des moyens suivants : une valve, un manchon destiné à entouré au moins partiellement la fibre optique principale, une résine thermoplastique ou thermodurcissable.

Selon une autre caractéristique de l'invention, un coupleur de fibres optiques selon l'invention comporte au niveau d'au moins une de ses extrémités, des moyens de couplage permettant de coupler au moins une de ses extrémités à une autre fibre optique à coeur liquide et/ou à un autre coupleur de fibres optiques selon la présente demande. Ainsi, plusieurs coupleurs de fibres optiques peuvent être optiquement connectés à une même source de lumière, dont une partie de la lumière peut être amenée aux différents endroits éclairés souhaités par les extrémités distales des fibres optiques secondaires qui sont couplées auxdits coupleurs. De façon avantageuse, chaque coupleur permet de coupler plus ou moins la lumière dans une ou plusieurs fibres optiques secondaires, de sorte que l'intensité lumineuse peut être similaire ou différente, au niveau des extrémités distales de chaque fibre optique secondaire.

Selon encore une autre caractéristique de l'invention, chaque fibre optique secondaire comprend au niveau de son extrémité distale des moyens de diffusion de la lumière se propageant dans la fibre optique secondaire. A titre d'exemple, ces moyens de diffusion peuvent comprendre au moins l'un des moyens suivants :
- une face plane,
- une face courbe au niveau de l'extrémité proximale de la fibre optique secondaire,
- un prisme ou un réseau optique ou une lentille commandée à courbure variable accolée à l'extrémité proximale de la fibre optique secondaire,
- une lentille ou un ensemble de lentilles destinées à ouvrir le faisceau lumineux sortant de la fibre optique secondaire correspondant.

La présente demande concerne également une fibre optique principale à coeur liquide, comportant une gaine principale contenant un liquide ou un gel d'indice optique supérieur à l'indice optique de la gaine, caractérisé en ce qu'elle comprend au moins un moyen de passage traversant la gaine, imperméable ou étanche au liquide ou au gel contenu dans la gaine, de sorte à permettre l'insertion et/ou le retrait de d'une extrémité proximale d'une fibre optique secondaire dans le liquide ou le gel contenu dans la gaine, en limitant la perte de liquide ou de gel contenu dans la gaine.

Un moyen de passage peut comprendre une valve ou un diaphragme déformable, par exemple réalisée en silicone, comprenant une fente apte à permettre le passage d'une fibre optique secondaire tout en étant étanche au milieu contenu dans la gaine principale.

L'invention concerne aussi un kit de couplage de fibres optiques comprenant une fibre optique principale à coeur liquide telle que décrite ci-dessus, et au moins une fibre optique secondaire, de plus petite section que le moyen de passage afin de permettre l'insertion d'une extrémité proximale de la fibre optique secondaire dans le coeur de la fibre optique principale..

L'invention se rapporte également à un procédé de division ou de découplage d'un faisceau de lumière à l'aide d'un kit décrit ci-dessus, comprenant les étapes suivantes :
- couplage d'un faisceau de lumière à une extrémité de la fibre optique principale ;
- introduction d'une extrémité proximale d'une fibre optique secondaire dans un moyen de passage de la fibre optique principale ;
- déplacement et/ou modification de l'inclinaison de l'extrémité proximale de la fibre optique secondaire dans le liquide ou le gel contenu dans la fibre optique principale jusqu'à obtenir à une extrémité distale de la fibre optique secondaire l'intensité lumineuse souhaitée.

Selon une variante de mise en oeuvre l'étape de couplage d'un faisceau de lumière dans la fibre optique principale peut être réalisée après déplacement et/ou modification de l'inclinaison de l'extrémité proximale de la fibre optique secondaire dans le liquide ou le gel contenu dans la fibre optique principale.

L'invention concerne également un dispositif et un kit permettant de découpler une partie d'un faisceau de lumière se propageant dans une fibre optique principale dans une fibre optique secondaire. Bien entendu, selon le principe de Fermât et plus précisément le principe du « retour inverse de la lumière », le dispositif et le kit peuvent également servir à coupler un faisceau de lumière se propageant dans une fibre optique secondaire dans une fibre optique principale.

Bien entendu, les différentes caractéristiques, variantes et formes de réalisation de l'invention peuvent être associées les unes avec les autres, selon diverses combinaisons, dans la mesure où elles ne sont pas incompatibles ou exclusives les unes des autres.

Les caractéristiques de l'invention mentionnées ci-dessus, ainsi que d'autres, apparaîtrons plus clairement à la lecture de la description, ci-dessous, d'exemples de réalisation non limitatifs, effectuée en référence aux dessins annexés sur lesquels :
- la figure 1 illustre un schéma d'une coupe longitudinale d'un coupleur optique selon l'invention ;
- la figure 2 illustre une variante de réalisation d'un coupleur optique selon la figure 1 ;
- la figure 3 illustre une variante de réalisation d'un coupleur optique selon la figure 1 ;
- la figure 4 illustre un schéma d'une coupe longitudinale d'un coupleur optique selon un autre mode de réalisation de l'invention ;
- la figure 5 illustre un schéma d'une coupe longitudinale d'un coupleur optique selon un autre mode de réalisation de l'invention ;
- la figure 6 illustre une coupe transversale selon l'axe CC' du coupleur optique représenté à la figure 5.

Un objectif de l'invention de permettre la réalisation d'un système d'éclairage multipoint à partir d'au moins une source principale de lumière de manière à permettre une diffusion de la lumière produite en plusieurs points distant de la source principale. Il est alors possible de parler d'éclairage à source déportée. A cet effet, l'invention propose de mettre en oeuvre au moins une fibre optique principale à coeur liquide, assurant le transport ou le guidage de la lumière issue de la source principale, en association avec au moins un coupleur optique permettant de prélever une partie de la lumière transportée pour la diffuser au niveau d'un point dit d'utilisation. La mise en oeuvre d'un coupleur optique selon l'invention permet alors de contrôler la proportion de lumière découplée de la fibre optique principale, ainsi que sa direction de propagation. Dans certaines variantes de réalisation le coupleur selon l'invention permet de modifier à volonté et rapidement, la proportion ainsi que la direction de la lumière découplée.

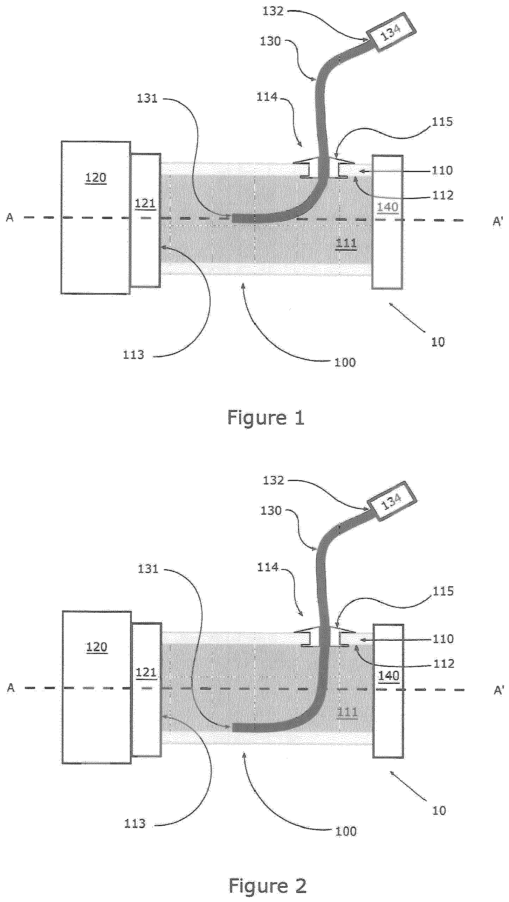

La figure 1 illustre un exemple non limitatif de réalisation d'un coupleur de fibres optiques 10 comportant une fibre optique principale à coeur liquide désignée par la référence 100, comprenant une gaine principale 110 contenant un liquide 111 ou un gel, d'indice optique supérieur à l'indice optique de la gaine. Selon le présent exemple, la gaine est de forme cylindrique et réalisée à partir d'un matériau polymérique de type plastique, PMMA, polycarbonate ou encore métal. L'épaisseur de la gaine est de l'ordre de 100 microns a 1 mm et délimite un volume interne dont le rayon est de l'ordre de 100µm. La paroi interne 112 de la gaine est étanche à un liquide 111 ou un gel dont l'indice optique est supérieur à l'indice optique de la gaine principale 110. Dans le cas présent, l'indice optique de la gaine principale 110 est de l'ordre de 1.2 (ou réfléchissant) et l'indice optique du liquide 111 de l'ordre de 1.5. Le liquide 111 se caractérise par une viscosité permettant l'insertion et le retrait d'un objet. A titre d'exemple, à température ambiante, la viscosité du liquide peut par exemple être comprise entre 600 et 700mPas. Bien entendu, le liquide 111 est choisi de sorte que ces propriétés optiques sont aptes à permettre de guider un faisceau de lumière se propageant dans le liquide. Le liquide 111 peut être par exemple être choisi parmi les liquides ou gels suivants : silicone, huile minérale, eau.

Dans le cas présent il est mise en oeuvre une source de lumière polychromatique 120 dont les longueurs d'onde sont comprises entre 300 et 1500nm, de préférence entre 350 et 780nm. Bien entendu la source de lumière peut aussi être monochrome ou encore associée à des moyens de réglage de sa couleur. La source de lumière 120 éclaire une extrémité 113 de la fibre optique principale de sorte à permettre la propagation d'au moins une partie de la lumière émise dans le liquide 111. La source de lumière peut par exemple être formée par un pavé de diodes électroluminescentes de forte puissance. La source de lumière 120 est couplée à la fibre optique principale 100 par des moyens 121 connus de l'homme du métier.

La gaine principale 110 comporte au moins un passage ou trou 114 dont les dimensions sont adaptées pour permettre le passage d'une extrémité proximale 131 d'une fibre optique secondaire 130. La fibre optique secondaire est une fibre optique classique, comprenant un coeur solide 132 par exemple mais non exclusivement de type silicone dont l'indice optique est de l'ordre de 1.2. Le coeur solide est nu ou entouré par une gaine 133 par exemple en matière plastique dont l'épaisseur est de l'ordre de 50microns. Afin d'éviter des fuites de liquide 111 au niveau du passage 114, celui peut comprendre un diaphragme ou un joint 115 en silicone. Dans le cas présent, le diaphragme 115 comporte une fente définissant deux lèvres d'étanchéité permettant de retenir le liquide à l'intérieur de la gaine principale 110 en absence ou présence de la gaine optique secondaire 130. Selon une variante de réalisation préférée non représentée, le diaphragme est suffisamment rigide mécaniquement pour assurer l'immobilisation par frottement mécanique, de la fibre optique secondaire au niveau de la gaine de la fibre optique principale, afin de préserver les conditions de couplage, en l'absence de sollicitation extérieure par un utilisateur. En d'autres termes, le diaphragme est configuré pour qu'un utilisateur puisse rapidement introduire, déplacer ou retirer une fibre optique secondaire dans la fibre optique principale, tout en maintenant la position de l'extrémité proximale dans la fibre optique secondaire entre les étapes de manipulation. A titre d'exemple, le diaphragme peut se prolonger à l'extérieur de la gaine principale 110 de sorte à former un fourreau apte à accueillir une fibre optique secondaire et à la maintenir au niveau de la gaine principale.

De préférence, la fibre optique secondaire 130 est courbée au niveau de son partie proximale, de sorte que son extrémité proximale soit sensiblement alignée avec l'axe AA', correspondant à la direction de propagation d'un faisceau de lumière émis par la source de lumière 120 dans le coeur liquide 111. Ainsi, une partie de la lumière se propageant dans la fibre optique principale est couplée dans la fibre optique secondaire 130. Bien entendu, l'extrémité proximale de la fibre optique secondaire est configurée pour optimiser ce phénomène de couplage. A titre d'exemple, l'extrémité proximale peut avoir une forme convexe ou concave, et sa face externe peut être polie. D'autres modes de réalisation connus de l'homme du métier peuvent être choisis. A titre d'exemple non limitatifs, au niveau de l'extrémité proximale de la fibre optique secondaire peut être accolé un prisme ou un réseau optique ou une lentille commandée à courbure variable telle que par exemple commercialisée par la société Varioptic.

De façon avantageuse, l'invention permet de contrôler aisément et précisément la proportion de lumière couplée dans la fibre optique secondaire 130. En effet, l'intensité lumineuse étant plus grande au centre d'une fibre optique qu'au niveau de sa périphérie, on peut aisément choisir de coupler plus ou moins de lumière dans la fibre optique secondaire en positionnement son extrémité proximale plus ou moins proche du centre de la fibre optique principale. Par le terme « centre », on entend le milieu du coeur liquide 111 illustré par l'axe AA' sur les figures. Ainsi, comme illustré à la figure 1, lorsque les centres des fibres optiques principale et secondaire sont alignées, une quantité plus importante de la lumière se propageant dans la fibre optique principale 100 est couplée dans la fibre optique secondaire 130 que lorsque l'extrémité proximale 131 de la fibre optique secondaire est agencée contre la paroi interne 112 de la gaine principale, tel qu'illustré à la figure 2. De cette façon, la quantité de lumière émise au niveau d'une extrémité distale 132 de la fibre optique secondaire 130 est contrôlée précisément et simplement, en fonction de la position de son extrémité proximale 131 dans la gaine principale 110.

Selon une autre caractéristique de l'invention illustrée à la figure 1, la fibre optique principale 100 comporte au niveau d'une extrémité opposée aux moyens de couplage 121, des moyens de couplage 140 permettant de coupler ladite extrémité à une autre fibre optique et/ou à un autre coupleur de fibres optiques tel que décrit ci-dessus, non représentés.

Selon une caractéristique complémentaire de l'invention également illustrée à la figure 1, la fibre optique secondaire 130 comprend au niveau de son extrémité distale 132 des moyens de diffusion 134 de la lumière se propageant dans la fibre optique secondaire. A titre d'exemple, les moyens de diffusion peuvent désigner l'un des éléments suivants : réseau, ou dispositif de couplage optique (ajustement mécanique au contact optique)

D'autres modes de réalisation de l'invention sont décrits ci-dessous, les différents éléments présentant les mêmes fonctions sont référencés avec des numéros présentant des chiffres des unités identiques.

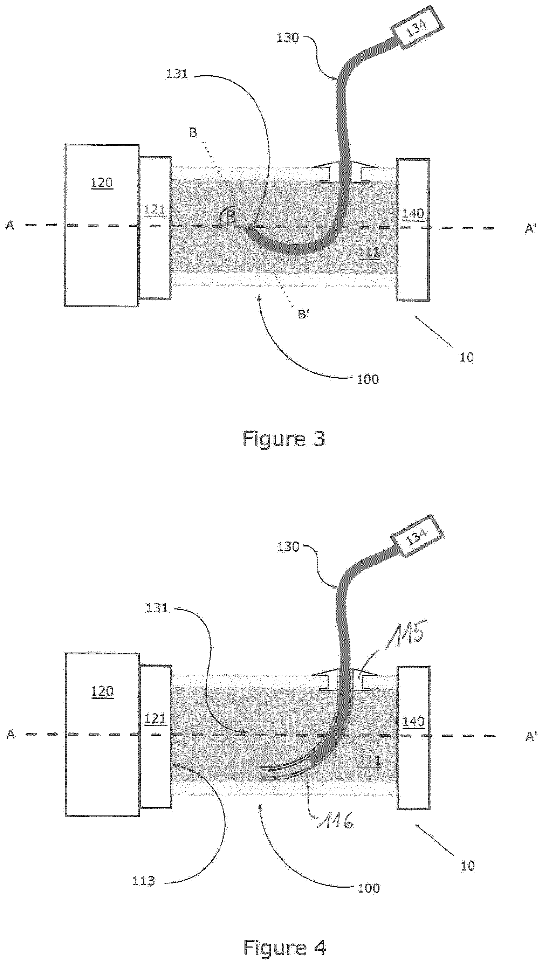

Selon un autre mode de réalisation illustré à la figure 3, la quantité de lumière couplée dans la fibre optique secondaire peut également être contrôlée plus précisément en modifiant l'angle β formé par les axes optiques des fibres optiques principale 100 et secondaire 130, respectivement AA' et BB', au niveau de l'extrémité proximale 131 de la fibre optique secondaire.

Selon un autre mode de réalisation illustré à la figure 4, le coupleur de fibres optiques 100 comprend une fibre optique principale 110 dont l'orifice de passage de la fibre secondaire 130 est équipé d'un joint 115 comprenant un guide tubulaire 116 au moins partiellement transparent au faisceau de lumière émis par la source de lumière 120. Le guide tubulaire 116 possède des dimensions complémentaires de celle de la fibre secondaire de manière à en guider l'extrémité proximale 131 de la fibre optique secondaire, lors de son introduction dans la gaine principale 110. Le guide tubulaire 116 est courbé et agencé dans la gaine principale de sorte qu'en fonction de la position de l'extrémité proximale 131 dans le guide tubulaire, la position et l'orientation de ladite extrémité proximale varie par rapport à l'axe AA'. Ainsi, il est possible de contrôler la quantité de lumière couplée dans la fibre optique secondaire en fonction de la longueur de fibre secondaire engagée dans le guide tubulaire.

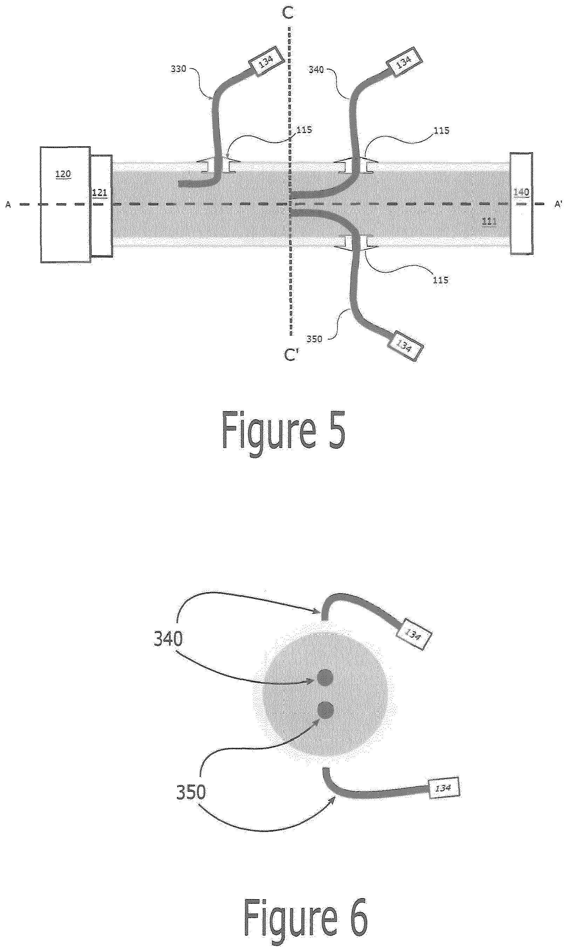

Selon un autre mode de réalisation illustré aux figures 5 et 6, un coupleur de fibres optiques 30 couple trois fibres optiques secondaires 330, 340 et 350 à une fibre optique principale 310. Bien entendu, ce nombre n'est pas limitatif. La fibre optique secondaire 330 est située en amont des autres fibres optiques secondaires. Les termes « amont » et « aval » sont définis par rapport au sens de propagation d'un faisceau de lumière dans la fibre optique principale. Les fibres optiques secondaires 330 et 340 sont positionnées l'une derrière l'autre, tandis que les fibres optiques secondaires 340 et 350 ont leur extrémité proximale comprises dans un même plan qui est normal à la direction de propagation d'un faisceau de lumière dans la fibre optique principale.

Afin de limiter le phénomène « d'ombre portée » crée par la fibre optique secondaire 330 sur les fibres optiques avales, les extrémités proximales des fibres avales sont plus proches du centre de la fibre optique principale que la fibre optique amont. On peut ainsi positionner avantageusement plusieurs fibres optiques les une derrière les autres, en décalant successivement leur extrémité proximale vers le centre de la fibre optique principale, de manière à minimiser le phénomène d'ombre portée créé par une ou plusieurs fibres amonts. En ce qui concerne le phénomène d'ombre portée, il doit être noté que ce dernier est d'autant moins prononcé voire inexistant lorsque chaque fibre optique secondaire présente un diamètre très inférieur à celui de la fibre optique principale.

Afin d'optimiser le nombre de fibres optiques secondaires couplées, les extrémités de plusieurs fibres optiques secondaires peuvent être agencées de façon régulière ou non, autour du centre la fibre optique principale 310 comme illustré à la figure 6.

Bien entendu, les différents modes de réalisation précédemment décrits peuvent être combinés entre eux pour obtenir des variantes de réalisation.

De même diverses autres variantes peuvent être envisagées dans le cadre des revendications annexées.

Un système d'éclairage selon l'invention peut être utilisé pour différents types d'applications telles que par exemple de l'éclairage architectural, de l'éclairage à l'intérieur de bâtiments, la réalisation de système d'éclairage et/ou de signalisation de véhicules terrestres, ariens ou encore maritime sans que cette liste ne soit ni limitative ni exhaustive.

## Revendications

1. Coupleur de fibres optiques (10) comportant une fibre optique principale (100) à coeur liquide, comprenant une gaine principale (110) contenant un liquide (111) ou un gel d'indice optique supérieur à l'indice optique de la gaine, **caractérisé en ce qu'**il comprend au moins une fibre optique dite secondaire (130), de plus petite section droite transversale que la fibre optique principale (100), traversant une partie de la gaine de la fibre à coeur liquide de sorte qu'une de ses extrémités dite proximale (131) est située dans le liquide (111) ou le gel contenu dans la gaine principale (110) tandis que l'autre extrémité dite distale (132) est située à l'extérieur de la gaine principale (110).

2. Coupleur de fibres optiques selon la revendication précédente, **caractérisé en ce qu'**au moins une fibre optique secondaire (130) comprend une gaine contenant un milieu dont l'indice optique est supérieur à l'indice optique du liquide ou du gel contenu dans la gaine principale (110).

3. Coupleur de fibres optiques selon l'une des revendications précédentes, **caractérisé en ce que** la fibre optique principale (100) et au moins une fibre optique secondaire (130) ont chacune une section circulaire, le diamètre de la fibre optique secondaire étant inférieur à la moitié du diamètre de la fibre optique principale.

4. Coupleur de fibres optiques selon l'une des revendications précédentes, **caractérisé en ce que** l'extrémité proximale (131) d'au moins une fibre optique secondaire (130), présente dans le liquide (111) ou gel contenu dans la gaine principale (110), comprend au niveau de son extrémité des moyens de couplage dit proximaux, permettant à au moins une partie d'une lumière se propageant dans la gaine principale de se propager dans la fibre optique secondaire.

5. Coupleur de fibres optiques selon la revendication précédente, **caractérisé en ce que** les moyens de couplage proximaux consistent en l'un des moyens suivants :
-- une face plane ; ou
-- une face courbe au niveau de l'extrémité proximale de la fibre optique secondaire ;
ou
-- un prisme ou un réseau optique ou une lentille commandée à courbure variable accolé à l'extrémité proximale de la fibre optique secondaire.

6. Coupleur de fibres optiques selon l'une des revendications précédentes, **caractérisé en ce qu'**une fibre optique secondaire (130) comprend une portion proximale mobile dans la fibre principale (110) pour permettre une modification de la position de l'extrémité proximale (131) de la fibre optique secondaire dans le liquide (111) ou le gel contenu dans la gaine principale (110).

7. Coupleur de fibres optiques selon l'une des revendications précédentes, **caractérisé en ce qu'**il comprend des moyens d'inclinaison (116) permettant de modifier l'inclinaison de l'extrémité proximale (131) de la fibre optique secondaire (130) dans le liquide (111) ou le gel contenu dans la gaine principale (110).

8. Coupleur de fibres optiques selon l'une des revendications précédentes, **caractérisé en ce qu'**il comprend au moins deux fibres optiques secondaires (330, 340, 350), qui sont situées en des endroits différents de la fibre optique (310) principale et dont les extrémités proximales sont distantes dans le liquide ou le gel contenu dans la gaine principale.

9. Coupleur de fibres optiques selon l'une des revendications précédentes, **caractérisé en ce que** la fibre optique principale comporte au niveau d'au moins une de ses extrémités des moyens de couplage (140) permettant de coupler au moins une de ses extrémités à une autre fibre optique et/ou à un autre coupleur de fibres optiques selon l'une des revendications précédentes.

10. Coupleur de fibres optiques selon l'une des revendications précédentes, **caractérisé en ce que** chaque fibre optique secondaire comprend au niveau de son extrémité distale des moyens de diffusion (134) de la lumière se propageant dans la fibre optique secondaire.

11. Fibre optique principale (100) à coeur liquide comportant une gaine principale (110) contenant un liquide (111) ou un gel d'indice optique supérieur à l'indice optique de la gaine principale, **caractérisé en ce qu'**elle comprend au moins un moyen de passage (115) traversant la gaine principale (110), imperméable au liquide (111) ou au gel contenu dans la gaine principale, de sorte à permettre l'insertion et/ou le retrait de d'une extrémité proximale (131) d'une fibre optique secondaire (130) dans le liquide (111) ou le gel contenu dans la gaine principale, en limitant la perte de liquide (111) ou de gel contenu dans la gaine.

12. Kit de couplage de fibres optiques comprenant une fibre optique principale (100) à coeur liquide (111) selon la revendication 10 et au moins une fibre optique secondaire (130), de plus petite section que le moyen de passage (115) afin de permettre l'insertion d'une extrémité proximale (131) de la fibre optique secondaire dans le coeur de la fibre optique principale.

13. Procédé de division d'un faisceau de lumière à l'aide d'un kit selon la revendication 12, comprenant les étapes suivantes :
- couplage d'un faisceau de lumière à une extrémité de la fibre optique principale (100) ;
- introduction d'une extrémité proximale (131) d'une fibre optique secondaire (130) dans un moyen de passage (115) de la fibre optique principale ;
- déplacement et/ou modification de l'inclinaison de l'extrémité proximale (131) de la fibre optique secondaire (130) dans le liquide (111) ou le gel contenu dans la fibre optique principale (100) jusqu'à obtenir à une extrémité distale (132) de la fibre optique secondaire l'intensité lumineuse souhaitée.
